# EUROPEAN PATENT APPLICATION

(11) **EP 4 295 969 A1**
(43) Date of publication of application: **27.12.2023**
(21) Application number: 21926800.0
(22) Date of filing: 21.12.2021
(51) Int. Cl.: B21F 5/00, B21F 15/04, H02K 15/04

(54) **METHOD FOR MANUFACTURING RECTANGULAR WIRE BUNDLE PRODUCT**

(30) Priority: 16.02.2021 JP 2021022381
(71) Applicant: SELCO CO., LTD., Nagano 384-0808 (JP)
(72) Inventor: KOBAYASHI, Nobutomo, Komoro-shi, Nagano 384-0808 (JP); ASANUMA, Yuji, Komoro-shi, Nagano 384-0808 (JP)
(74) Representative: Mewburn Ellis LLP
(86) International application number: PCT/JP2021/047277
(87) International publication number: WO 2022/176377

(57) **Abstract**

A manufacturing method of a rectangular wire bundle product includes a bending step of bending an assembled wire composed of a plurality of strand wires having an insulating film into a predetermined shape, a rectangular shape formation step of forming the assembled wire bent into the predetermined shape in the bending step into a rectangular shape so that a cross section becomes a rectangular shape, and an integration step of integrating at least a part of the assembled wire formed into the rectangular shape in the rectangular shape formation step by thermal bonding.

## Description

### Technical Field

The present invention relates to a manufacturing method of a rectangular wire bundle product obtained by molding a plurality of bundled strand wires into a coil shape or the like and forming a flat rectangular wire.

### Background Art

Recently, in response to performance improvement of in-vehicle motors of hybrid vehicles or electrical vehicles, flat rectangular wires have been used in coils. In addition, there is a tendency that the cross-sectional areas of windings become large for the purpose of additional improvement in the space factor of coils or improvement in torque. However, there has been a problem in that, as the cross-sectional area increases, the eddy current loss increases. As a countermeasure for this eddy current loss, a method in which an assembled wire obtained by integrating a plurality of enamel strand wires is used as a conductor in coils, which are provided in stator cores of motors, is drawing attention. The use of assembled wires has an advantage in that conductor losses (eddy losses), which are caused due to the influence of an eddy current, can be reduced compared with single wires.

Conventionally, for the manufacturing of a rectangular wire bundle product such as a hairpin coil for an in-vehicle motor, first, a plurality of enamel strand wires (square wires or round wires) is stretched linearly and assembled. Next, the plurality of assembled enamel strand wires is molded into an assembled flat rectangular wire having a square cross-sectional shape. Next, a thermal bonding film such as a polyamide applied onto an insulating film of the enamel strand wires is thermally cured to produce a linear bus wire for bending the assembled flat rectangular wire (assembled wire before bending). In addition, this bus wire of the assembled flat rectangular wire is bent with a bending machine (multi-vender or the like) to mold a processed product, such as a hairpin coil, of the assembled flat rectangular wire.

In addition, a method for manufacturing a flat litz wire obtained by twisting a plurality of enamel strand wires and then molding the enamel strand wires so that the cross section becomes a flat shape is proposed (for example, Patent Literature 1).

In a manufacturing method of a flat litz wire described in Patent Literature 1, first, a plurality of self-bonding enamel wires is prepared as strand wires. Next, the plurality of self-bonding enamel wires is twisted to produce a round litz wire having a circular cross section. In the end, this self-bonding flat litz wire is intermittently sent into a heating furnace, whereby it is possible to obtain a flat litz wire having a configuration in which thermal bonding parts and non-thermal bonding parts are alternately provided repeatedly at constant intervals along the longitudinal direction.

### Citation List

### Patent Literature

Patent Literature 1
Japanese Patent Laid-Open No. 2000-90747

### Summary of Invention

### Technical Problem

However, in the above-described conventional manufacturing of a rectangular wire bundle product, since the thermally cured assembled flat rectangular wire is bent, there has been a problem in that, at the time of molding a processed product such as a hairpin coil that needs to be bent into a complicated shape, the breakage or damage of the insulating film of the enamel strand wires, an increase in the resistance value due to the stretch of conductive wires, wire breakage or the like occurs and it is not possible to ensure the reliability of the conductive wires.

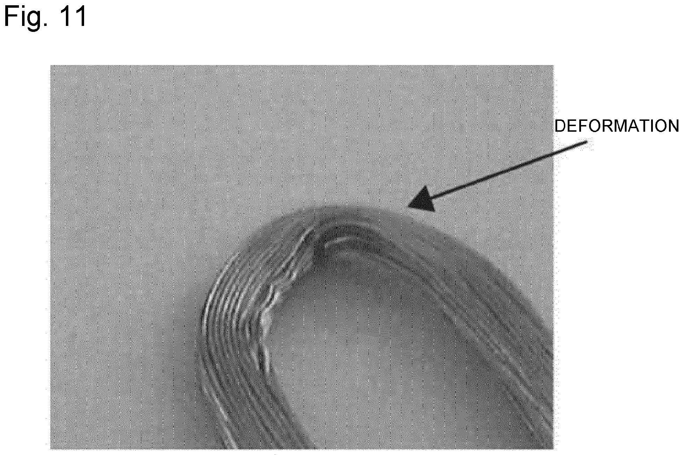

In addition, in a case where a processed product, such as a hairpin coil, is molded from an assembled flat rectangular wire manufactured by the conventional assembled flat rectangular wire manufacturing method, since the assembled flat rectangular wire is an assembled body obtained by thermally curing the fine enamel strand wires, after bending, a difference in radius occurs between the conductive wire in the inner periphery and the conductive wire in the outer periphery as shown in Figure 11, the conductive wire in the outer periphery fails to withstand pulling and moves toward the inner periphery, and the conductive wire in the inner periphery could not shrink and thus deforms to escape outwards or collapses. At that time, since an extremely disordered load is subjected between the conductive wires, there has been a problem in that the damage of the insulating film or the breakage of the fine conductive wire may occur.

Therefore, an objective of the present invention is to provide a manufacturing method of a rectangular wire bundle product in which a load that is subjected between strand wires (conductive wires) due to bending can be reduced.

Another objective of the present invention is to provide a manufacturing method of a rectangular wire bundle product that is suitable for mass production at a low cost.

### Solution to Problem

According to the present invention, a manufacturing method of a rectangular wire bundle product includes a bending step of bending an assembled wire composed of a plurality of strand wires having an insulating film into a predetermined shape, a rectangular shape formation step of forming the assembled wire bent into the predetermined shape in the bending step into a rectangular shape so that a cross section becomes a rectangular shape, and an integration step of integrating at least a part of the assembled wire formed into the rectangular shape in the rectangular shape formation step by thermal bonding.

At the time of manufacturing a rectangular wire bundle product such as a hairpin coil, before at least a part of the assembled wire is integrated by the thermal bonding of a thermosetting resin or a thermoplastic resin, the assembled wire is bent into a predetermined shape and formed into a rectangular shape so that the cross section becomes a rectangular shape, whereby it is easy for single wires to freely move in a mold with no loads during the bending, it is possible to reduce a load that is subjected between the conductive wires (strand wires) due to the bending, the occurrence of the breakage, damaging or the like of the insulating film of the enamel strand wires is avoided, an increase in the resistance value and a risk of wire breakage due to the stretch of the conductive wire are minimized, and electrical reliability can be ensured.

In the bending step, it is preferable that the assembled wire be set in a groove of one mold having the groove with a square cross section and bent into the predetermined shape, and, in the rectangular shape formation step, the assembled wire be pressurized with another mold having a protrusion part capable of fitting into the groove to be formed into a rectangular shape and heated and integrated in the integration step as it is.

The assembled wire is a litz wire obtained by twisting a plurality of round wires having a circular cross-sectional shape having an insulating film and is a self-bonding wire having a bonding film that further coats a periphery of the insulating film.

It is preferable that the litz wire has a twist pitch of 150 mm or more.

It is preferable that an assembled wire formation step of forming an assembled wire obtained by assembling a plurality of strand wires having an insulating film be further provided.

### Advantageous Effects of Invention

According to the manufacturing method of a rectangular wire bundle product of the present invention, an assembled wire composed of a plurality of strand wires having an insulating film is bent into a predetermined shape, the bent assembled wire is formed into a rectangular shape so that the cross section becomes a rectangular shape, and then at least a part of the assembled wire is integrated by the thermal bonding of a thermosetting resin or a thermoplastic resin, whereby it is easy for single wires to freely move in a mold with no loads during the bending, it is possible to reduce a load that is subjected between the conductive wires due to the bending, the occurrence of the breakage, damaging or the like of the insulating film of the enamel strand wires is avoided, an increase in the resistance value and a risk of wire breakage due to the stretch of the conductive wire are minimized, and electrical reliability can be ensured.

### Brief Description of Drawings

[Figure 1] Figure 1 is a flowchart showing steps of manufacturing a hairpin coil by a manufacturing method of an assembled flat rectangular wire processed product according to one embodiment of the present invention.
[Figure 2] Figure 2 is a perspective view schematically showing an assembled wire formed by an assembled wire formation step of the manufacturing method of an assembled flat rectangular wire processed product according to the present invention.
[Figure 3] Figure 3 is a perspective view showing an example of molding molds and an assembled wire that are used in a bending step, rectangular shape formation step and an integration step in the manufacturing method of a rectangular wire bundle product according to the present invention.
[Figure 4] Figure 4 is an end surface view showing a state where the assembled wire is formed into a rectangular shape in the rectangular shape formation step of the manufacturing method of a rectangular wire bundle product according to the present invention.
[Figure 5] Figure 5 is a perspective view showing an example of an assembled flat rectangular wire processed product manufactured by the manufacturing method of a rectangular wire bundle product according to the present invention.
[Figure 6] Figure 6 is a comparative view of a hairpin coil manufactured by the manufacturing method of a rectangular wire bundle product according to the present invention and a hairpin coil manufactured by a conventional manufacturing method.
[Figure 7] Figure 7 is a perspective view schematically showing different configuration examples of the assembled wire formed by the assembled wire formation step of the manufacturing method of an assembled flat rectangular wire processed product according to the present invention.
[Figure 8] Figure 8 is a perspective view schematically showing different examples of the rectangular wire bundle product manufactured by the manufacturing method of a rectangular wire bundle product according to the present invention.
[Figure 9] Figure 9 is a perspective view schematically showing another different example of the rectangular wire bundle product manufactured by the manufacturing method of a rectangular wire bundle product according to the present invention.
[Figure 10] Figure 10 is a perspective view showing a different configuration example of the molding molds that are used in the rectangular shape formation step and the integration step of the manufacturing method of a rectangular wire bundle product according to the present invention and a manufactured a rectangular wire bundle product.
[Figure 11] Figure 11 is a view showing a bent part of a hairpin coil manufactured by a conventional manufacturing method of an assembled flat rectangular wire processed product.

### Description of Embodiment

Hereinafter, an embodiment of a manufacturing method of a rectangular wire bundle product according to the present invention will be described with reference to drawings.

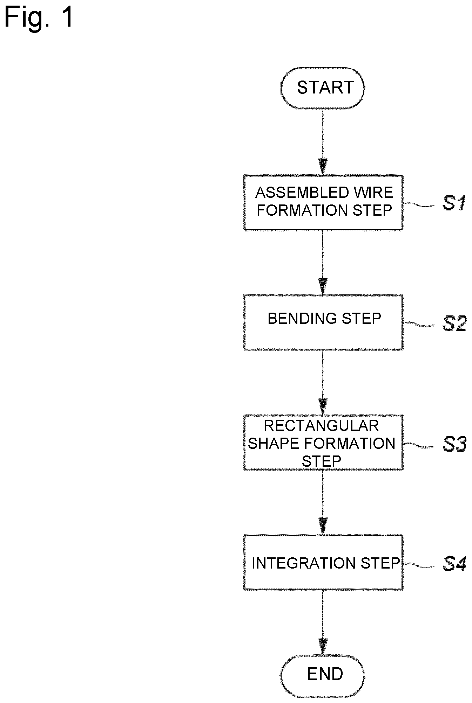

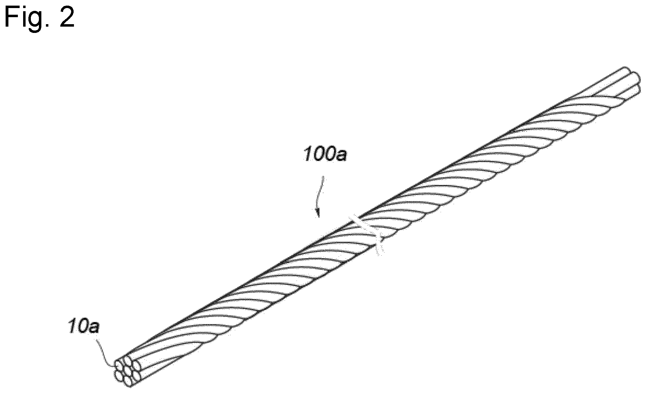

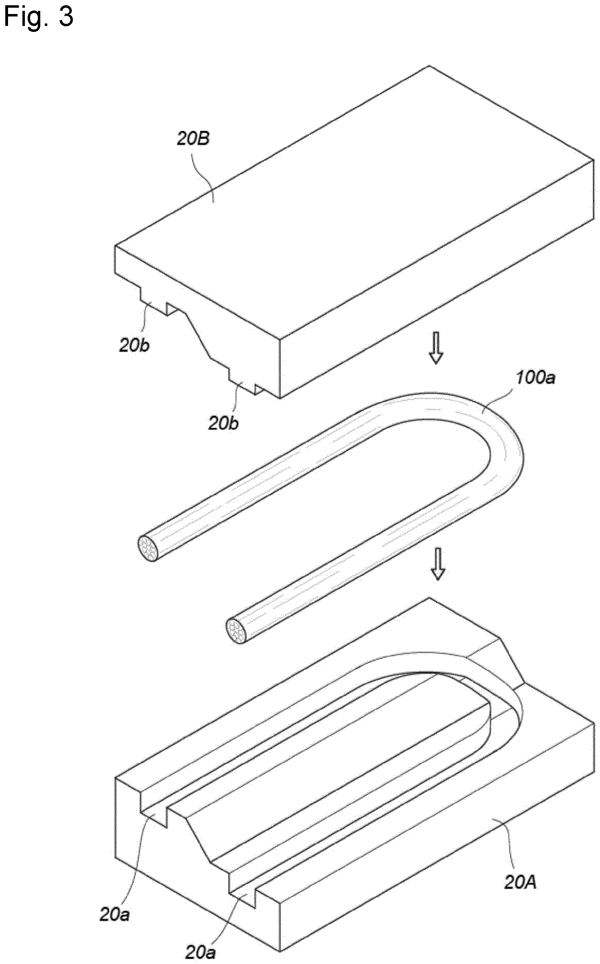

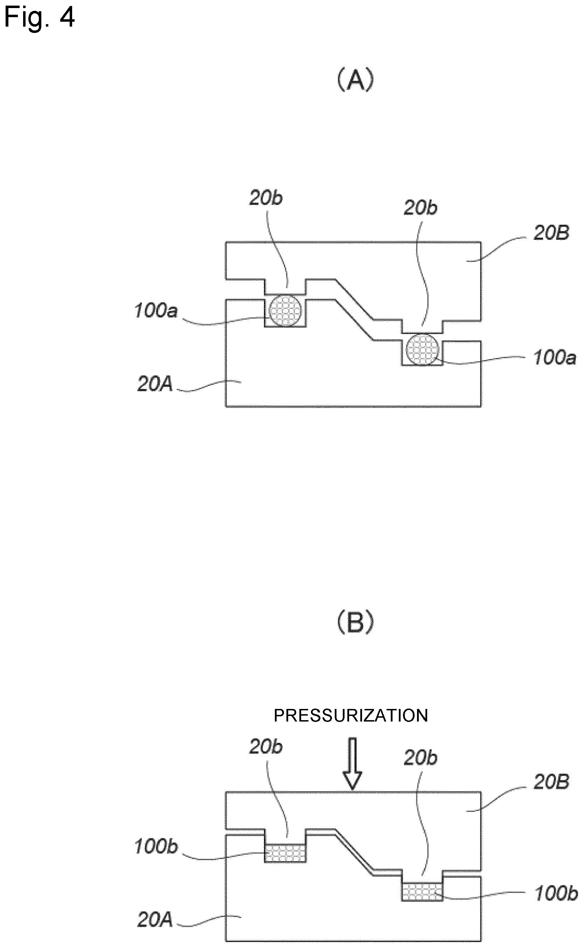

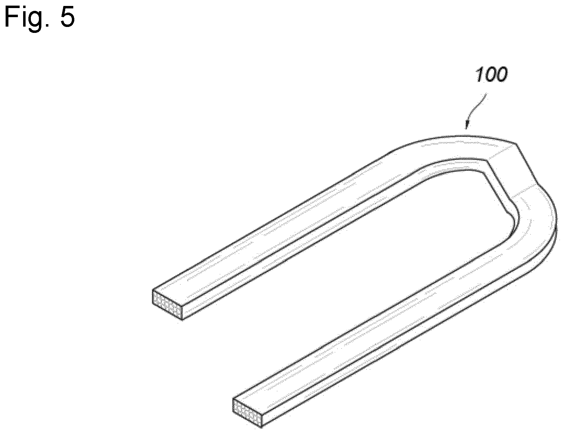

Figure 1 shows a manufacturing method of a rectangular wire bundle product according to an embodiment of the present invention. Figure 2 shows an assembled wire formed in an assembled wire formation step. Figure 3 shows molding molds that are used in the bending step and a rectangular shape formation step, and the round assembled wire that is disposed in the molding molds. Figure 4 shows a state where the assembled wire has been formed into a rectangular shape by pressurization in the rectangular shape formation step, Figure 4(A) shows a state of the molding molds and the end surface of the assembled wire before the pressurization, and Figure 4(B) shows the molding molds and the end surface of the assembled wire formed into the rectangular shape after the pressurization. Figure 5 shows a rectangular wire bundle product manufactured by the manufacturing method of a rectangular wire bundle product according to the present invention.

The manufacturing method of a rectangular wire bundle product includes, as shown in Figure 1, firstly an assembled wire formation step of assembling a plurality of strand wires having an insulating film to form an assembled wire (step S1), a bending step of bending the assembled wire formed in the assembled wire formation step into a predetermined shape (step S2), a rectangular shape formation step of forming the assembled wire bent into the predetermined shape in the bending step into a rectangular shape so that the cross section becomes a rectangular shape (step S3), and an integration step of integrating at least a part of the assembled wire formed into the rectangular shape in the rectangular shape formation step by heating a thermosetting resin (or a thermoplastic resin) (step S4).

In the assembled wire formation step (step S1), a round litz wire obtained by assembling and twisting a plurality of strand wires having an insulating film, for example, enamel wires 10a having a circular cross-sectional shape, together is made into an assembled wire 100a (refer to Figure 2). Here, the enamel wire is, for example, a self-bonding wire having φ0.2 mm and a thermal bonding film composed of a thermosetting resin on the surfaces of 100 insulating films. In a case where a plurality of enamel strand wires is bundled, contact between the strand wires is smooth, and, when the bundling condition during assembling is taken into account, round wires are stable and advantageous. In addition, in this case, the twist pitch of the litz wire is desirably 150 mm or more. In addition, in a case where an ordinary round litz wire (off-the-shelf product) is used, the assembled wire formation step simply becomes an operation of cutting the litz wire to a necessary length. Therefore, the manufacturing of a rectangular wire bundle product that is suitable for mass production at a low cost is possible. The enamel wire may have a thermoplastic resin coating on the surfaces of the insulating films.

In the bending step (step S2), the assembled wire 100a formed in the assembled wire formation step is bent into a predetermined shape (for example, a hairpin coil shape). Here, as shown in Figure 3, the linear assembled wire 100a is set to bend along a groove 20a having a square cross section in a lower mold 20A, whereby the assembled wire 100a is molded into a U shape. The assembled wire 100a may be set in the groove 20a having a square cross section in the lower mold 20A after being bent in a U shape with a multi-vendor or the like.

In the rectangular shape formation step (step S3), the assembled wire 100a bent into the predetermined shape in the bending step is formed into a rectangular shape so that the cross section becomes a rectangular shape. Here, for example, as shown in Figure 4(A), the round assembled wire 100a in the bending step is set in the groove 20a having a square cross section in the lower mold 20A. In addition, as shown in Figure 4(B), the assembled wire 100a is pressurized from above with an upper mold 20B having a protrusion part 20b capable of fitting into the groove 20a and formed into a rectangular shape. Therefore, an assembled wire 100b is formed.

In the integration step (step S4), the assembled wire 100b formed into a rectangular shape in the rectangular shape formation step is integrated by the thermal curing of a thermosetting resin. Here, for example, in a case where a self-bonding enamel wire having a thermal bonding film composed of a thermosetting resin on the surfaces of insulating films is used, the assembled wire is formed into a rectangular shape with the molds 20A and 20B, the molds 20A and 20B are heated as it is, and the assembled wire 100b is integrated by the thermal curing of the thermosetting resin. Finally, the assembled wire is cooled, and a rectangular wire bundle product 100 is removed. Figure 5 shows the rectangular wire bundle product 100 obtained by integrating the assembled wire 100b formed into a rectangular shape. Mass production can be easily realized with a method or facility similar to that of injection molding as described above. In addition, the self-bonding enamel wire is used, whereby the bonding film melts during the heating, and the number of voids in the assembled wire decreases, which makes it possible to improve the thermal conduction efficiency.

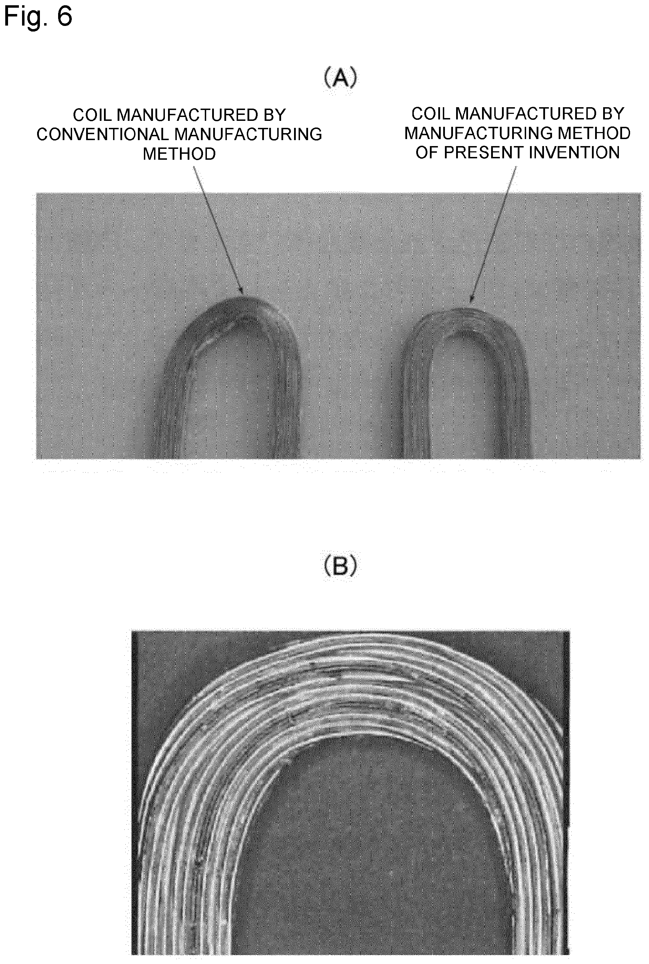

Figure 6 shows comparison of a hairpin coil manufactured by the manufacturing method of a rectangular wire bundle product according to the present invention and a hairpin coil manufactured by a conventional manufacturing method, Figure 6(A) shows bent parts of the hairpin coil manufactured by the manufacturing method of a rectangular wire bundle product of the present invention and the hairpin coil manufactured by the conventional manufacturing method, and Figure 6(B) is an enlarged view of the bent part of the hairpin coil manufactured by the manufacturing method of a rectangular wire bundle product of the present invention. In the part bent at a sharp R of the hairpin coil manufactured by the manufacturing method of a rectangular wire bundle product of the present invention compared with that in the hairpin coil manufactured by the conventional manufacturing method as shown in Figure 6, there are no cases where, after the bending, conductive wires in the outer periphery are pulled to move toward the inner periphery, conductive wires in the inner periphery do not shrink and thus deform to escape outwards, and the shape of the bent part collapses.

As described above, in the manufacturing method of a rectangular wire bundle product of the present embodiment, the assembled wire 100a obtained by assembling a plurality of strand wires having an insulating film is formed, the formed assembled wire 100a is bent into a predetermined shape, the bent assembled wire 100a is formed into a rectangular shape so that the cross section becomes a rectangular shape, and then the assembled wire 100b formed into a rectangular shape is integrated by the thermal curing of the thermosetting resin, whereby the space factor improves, it is easy for single wires to freely move in the mold with no loads during the bending, it is possible to reduce the load that is subjected between the conductive wires due to the bending, the occurrence of the breakage, damaging or the like of the insulating film of the enamel strand wires is avoided, an increase in the resistance value and a risk of wire breakage due to the stretch of the conductive wire are minimized, and electrical reliability can be ensured.

In addition, the round litz wire is used as the assembled wire 100a, whereby the manufacturing of a rectangular wire bundle product that is suitable for mass production at a low cost is possible. In addition, the litz wire having a twist pitch of 150 mm or more is used, whereby it is possible to further improve the space factor.

In the above-described embodiment, an example where the assembled wire 100a has a twist pitch of 150 mm or more has been described, but the present invention is not limited thereto. For example, as the assembled wire 100a, an ordinary round litz wire may be used. In this case, since the twist pitch is relatively small, the space factor of an obtained rectangular wire bundle product is somewhat lower than that of a wire having a twist pitch of 150 mm or more.

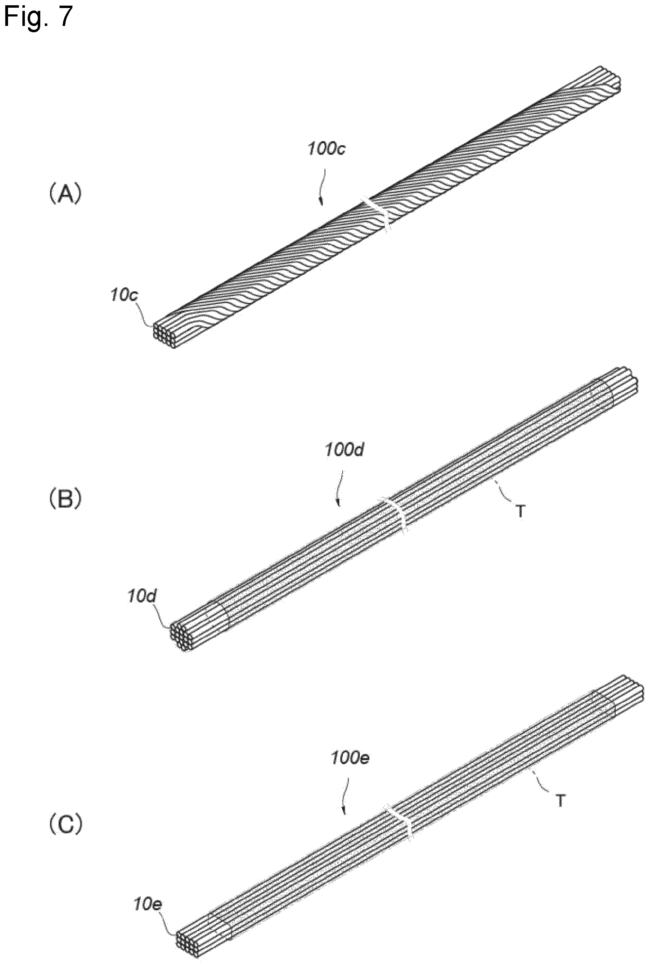

In addition, in the above-described embodiment, an example where the round litz wire formed by assembling a plurality of strand wires in the assembled wire formation step is used as the assembled wire 100a has been described, but the present invention is not limited thereto. For example, an assembled wire having a different shape formed by assembling a plurality of strand wires having an insulating film in the assembled wire formation step (refer to Figure 7) may be used.

Figure 7 shows configuration examples of other assembled wires. Figure 7(A) is a round wire rectangular assembled wire (litz wire) 100c, Figure 7(B) is a round wire round assembled wire 100d obtained by stretching a plurality of round wires having an insulating film linearly and assembling the round wires in parallel, and Figure 7(C) is a round wire rectangular assembled wire 100e obtained by stretching a plurality of round wires having an insulating film linearly and assembling the round wires in parallel. In the case of the round wire rectangular assembled wire (litz wire) 100c shown in Figure 7(A), an assembled wire formation process is difficult, but it is possible to improve the space factor. In this case, the twist pitch is desirably 150 mm or more. In addition, in the case of the round wire round assembled wire 100d and the round wire rectangular assembled wire 100e shown in Figure 7(B) and Figure 7(C), in the assembled wire formation step, a plurality of strand wires having an insulating film is assembled in parallel, wound with polyester fiber TEFLON (registered trademark) or resin tape and fixed, whereby the assembled wire can be formed. As the assembled wire, a square wire rectangular assembled wire obtained by stretching a plurality of square wires having an insulating film linearly, assembling the square wires in parallel, winding the square wires with polyester fiber TEFLON (registered trademark) or resin tape and fixing the square wires may be used.

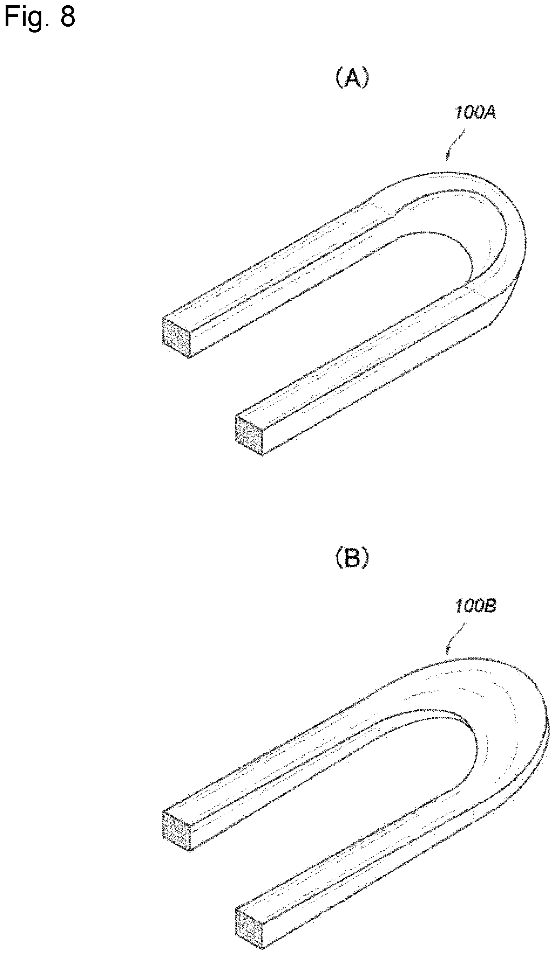

In addition, in the above-described embodiment, an example where the mold having a groove with a 3D shape is used in the rectangular shape formation step has been described, but the present invention is not limited thereto. A mold having a groove with a 2D shape may be used. Coils with a different shape can also be processed by devising the shape of the mold. For example, a change in the outer shape having the same cross-sectional area in the same coil as shown in Figure 8, which is impossible in conventional assembled wires, becomes possible. That is, it is possible to change the shapes of a start part and an end part of a hairpin coil. Figure 8(A) shows an example where the height of a curved portion of a coil (coil end part) in the radial direction is decreased. For example, in the case of a hairpin coil for an EV motor, a design in which the shape is an ordinary flat rectangular wire in the slot and the height of the entire motor is decreased by suppressing the height of the coil end part becomes possible. In addition, Figure 8(B) shows an example where the thickness becomes thinner gradually from a start part of a hairpin col to a curved portion of the coil. Since neither the diameter of a strand wire (single wire) that configures the assembled wire nor the number of wires changes as described above, the cross-sectional area of the entire assembled wire does not change, and it is possible to suppress a change in the resistance value and prevent the resistance value from affecting the electrical characteristics of the coil.

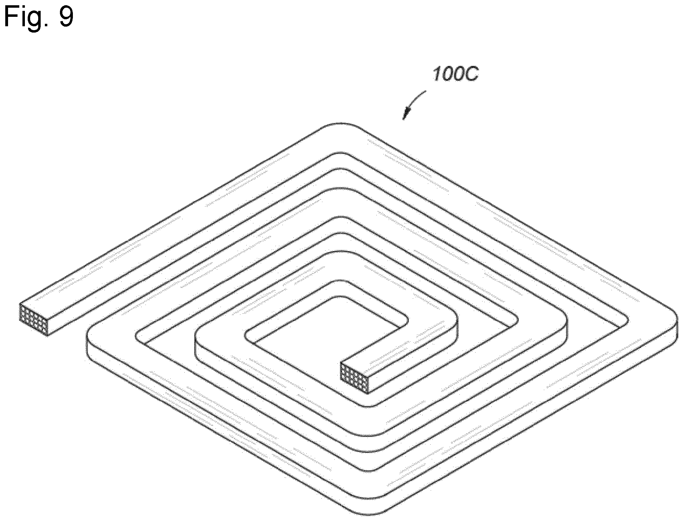

In addition, in the above-described embodiment, an example where the rectangular wire bundle product is a hairpin coil has been described, but the present invention is not limited thereto. The present embodiment can also be applied to a rectangular wire bundle product 100C being a spiral coil as shown in Figure 9. This rectangular wire bundle product 100C can be used as a unit for wireless charging by being disposed in a groove provided in a base plate. When the rectangular wire bundle product 100C being a spiral coil is used, it is possible to further reduce the thicknesses of units for wireless charging and to further improve the space factor of the coil than those in a case where a conventional round wire round litz wire is used.

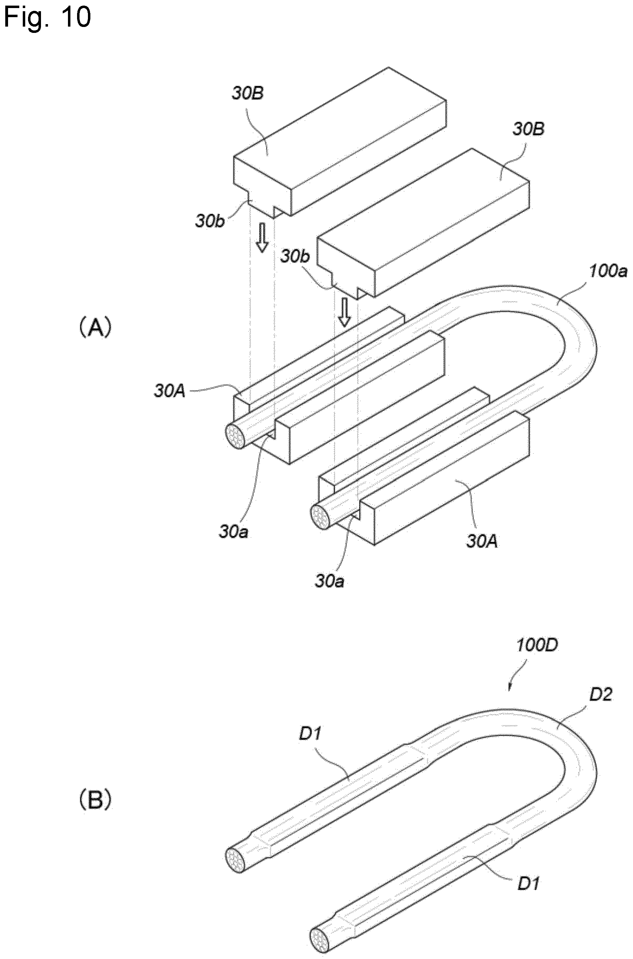

In addition, in the above-described embodiment, an example where the rectangular wire bundle product 100 in a form of a hairpin coil is fully integrated by the heating of the thermosetting resin has been described, but the present invention is not limited thereto. For example, as shown in Figure 10, only a part of the hairpin may be integrated by the heating of the thermosetting resin. Figure 10 shows the configurations of molds (30A and 30B) that are used in the rectangular shape formation step and the integration step of the manufacturing method of a rectangular wire bundle product according to the present invention and a manufactured rectangular wire bundle product 100D. As shown in Figure 10(A), the divided molds are prepared, the assembled wire 100a is bent into a U shape in the rectangular shape formation step (step S3), and then parts of the linear parts of the coil are set in grooves 30a having a square cross section in the lower mold 30A. Next, the assembled wire 100a is pressurized from above with the upper molds 30B having protrusion parts 30b capable of fitting into the grooves 30a and formed into a rectangular shape. In addition, the molds (30A and 30B) are each heated in a concentrated manner by an HI method to partially cure the thermosetting resin. Therefore, the rectangular wire bundle product 100D is formed as shown in Figure 10(B). In this rectangular wire bundle product 100D, linear parts D1 have a rectangular shape and are integrated, a curved portion (coil end part) D2 has a rectangular shape and is not integrated, and the cured portions and a free portion (uncured portion) are present at the same time in the hairpin coil. Therefore, in a subsequent step, for example, the terminals of the coil are connected to a busbar or the like with hinges or by welding or a drawing treatment is performed on the curved portion D2 of the coil as the coil end, and thus there are cases where, depending on the situation, the operation efficiency of a subsequent operation is favorable when the assembled wire is not thermally cured.

In addition, in the above-described embodiment, an example where the enamel wire is a self-bonding enamel wire having a thermal bonding film composed of a thermosetting resin on the surface of an insulating film has been described, but the present invention is not limited thereto. For example, in a case where an enamel wire having no thermal bonding film is used, a thermosetting resin or a thermoplastic resin may be loaded into the gaps between a plurality of strand wires of the assembled wire and heated in the integration step.

The present invention is not limited to the embodiment and includes embodiments designed in a variety of different manners within the scope of the gist of the invention to be described in the claims in the technical scope.

### Industrial Applicability

The present invention can be used for the purpose of manufacturing, particularly, an assembled flat rectangular wire processed product that needs to be bent in a complicated shape such as hairpin coils for in-vehicle motors.

### Reference Signs List

10a Strand wire (single wire)
20a, 30a Groove
20b, 30b Protrusion part
20A, 30A Mold (lower mold)
20B, 30B Mold (upper mold)
100a, 100c, 100d, 100e Assembled wire
100b Assembled wire formed into rectangular shape
100, 100A, 100B, 100C, 100D rectangular wire bundle product
D1 Linear part
D2 Curved portion (coil end part)

## Claims

1. A manufacturing method of a rectangular wire bundle product, the method
comprising:
a bending step of bending an assembled wire composed of a plurality of strand wires having an insulating film into a predetermined shape;
a rectangular shape formation step of forming the assembled wire bent into the predetermined shape in the bending step into a rectangular shape so that a cross section becomes a rectangular shape; and
an integration step of integrating at least a part of the assembled wire formed into the rectangular shape in the rectangular shape formation step by thermal bonding.

2. The manufacturing method of a rectangular wire bundle product according to claim 1, wherein, in the bending step, the assembled wire is set in a groove of one mold having the groove with a square cross section and bent into the predetermined shape, and, in the rectangular shape formation step, the assembled wire is pressurized with another mold having a protrusion part capable of fitting into the groove to be formed into a rectangular shape and heated and integrated in the integration step as it is.

3. The manufacturing method of a rectangular wire bundle product according to claim 1 or 2, wherein the assembled wire is a litz wire obtained by twisting a plurality of round wires having a circular cross-sectional shape having an insulating film and is a self-bonding wire having a bonding film that further coats a periphery of the insulating film.

4. The manufacturing method of a rectangular wire bundle product according to claim 3, wherein the litz wire has a twist pitch of 150 mm or more.

5. The manufacturing method of a rectangular wire bundle product according to any one of claims 1 to 4, the method further comprising:
an assembled wire formation step of forming an assembled wire obtained by assembling a plurality of strand wires having an insulating film.

## Amended claims

### Amended claims under Art. 19.1 PCT

1. (After amendment) A manufacturing method of a rectangular wire bundle product, the method
comprising:
a bending step of bending an assembled wire composed of a plurality of strand wires having an insulating film into a predetermined shape;
a rectangular shape formation step of forming the assembled wire bent into the predetermined shape in the bending step into a rectangular shape so that a cross section becomes a rectangular shape; and
an integration step of integrating at least a part of the assembled wire formed into the rectangular shape in the rectangular shape formation step by thermal bonding,
wherein, in the bending step, the assembled wire is set in a groove of one mold having the groove with a square cross section and bent into the predetermined shape, and, in the rectangular shape formation step, the assembled wire is pressurized with another mold having a protrusion part capable of fitting into the groove to be formed into a rectangular shape and heated and integrated in the integration step as it is.

2. (Deleted)

3. (After amendment) The manufacturing method of a rectangular wire bundle product according to claim 1, wherein the assembled wire is a litz wire obtained by twisting a plurality of round wires having a circular cross-sectional shape having an insulating film and is a self-bonding wire having a bonding film that further coats a periphery of the insulating film.

4. The manufacturing method of a rectangular wire bundle product according to claim 3, wherein the litz wire has a twist pitch of 150 mm or more.

5. (After amendment) The manufacturing method of a rectangular wire bundle product according to any one of claims 1, 3 and 4, the method further comprising:
an assembled wire formation step of forming an assembled wire obtained by assembling a plurality of strand wires having an insulating film.
